(19) Europäisches Patentamt / European Patent Office / Office européen des brevets

(11) **EP 2 243 627 B1**

(12) **EUROPEAN PATENT SPECIFICATION**


(45) Date of publication and mention of the grant of the patent: **18.09.2013 Bulletin 2013/38**

(21) Application number: **09710350.1**

(22) Date of filing: **10.02.2009**

(51) Int Cl.: ***B32B 27/36*** *(2006.01)* ***C08K 5/134*** *(2006.01)* ***C08K 5/372*** *(2006.01)* ***C08L 69/00*** *(2006.01)*

(86) International application number: **PCT/JP2009/052591**

(87) International publication number: **WO 2009/102071 (20.08.2009 Gazette 2009/34)**


(54) **POLYCARBONATE RESIN LAYERED SHEET**

POLYCARBONATHARZSCHICHTFOLIE

FEUILLE À COUCHES DE RÉSINE EN POLYCARBONATE


(84) Designated Contracting States: **AT BE BG CH CY CZ DE DK EE ES FI FR GB GR HR HU IE IS IT LI LT LU LV MC MK MT NL NO PL PT RO SE SI SK TR**

(30) Priority: **13.02.2008 JP 2008031925**

(43) Date of publication of application: **27.10.2010 Bulletin 2010/43**



(73) Proprietor: **Teijin Chemicals, Ltd.**
**Chiyoda-ku**
**Tokyo 100-0013 (JP)**

(72) Inventors:
- **MATSUMOTO, Moritoshi**
**Tokyo 100-0013 (JP)**
- **TANABE, Seiichi**
**Tokyo 100-0013 (JP)**
- **ARIKI, Jiro**
**Tokyo 100-0013 (JP)**

(74) Representative: **Albrecht, Thomas**
**Kraus & Weisert**
**Patent- und Rechtsanwälte**
**Thomas-Wimmer-Ring 15**
**80539 München (DE)**



(56) References cited:
**JP-A- 6 312 493**
**JP-A- 6 312 493**
**JP-A- 57 149 335**
**JP-A- 2000 264 977**
**JP-A- 2002 020 604**
**JP-A- 2002 020 604**
**JP-A- 2006 002 120**
**JP-A- 2006 028 442**
**JP-A- 2006 028 442**
**US-A- 5 108 835**
**US-B1- 6 333 114**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 2 243 627 B1

## Description

Field of the Invention

The present invention relates to a polycarbonate resin laminated sheet. More specifically, it relates to a laminated sheet which is excellent in color and weatherability and suitable for use as a construction material and to a manufacturing process thereof.

Description of the Prior Art

Polycarbonate resin is widely used in electric, mechanical, automobile and medical fields because it has excellent transparency, heat resistance and mechanical strength. However, the polycarbonate resin is not satisfactory in terms of weatherability. For instance, when it is used outdoors or indoors under illumination with a fluorescent lamp, its use is greatly restricted due to the discoloration of a product or a reduction in its strength. Further, the surface of the polycarbonate resin is readily damaged by the application of ultraviolet radiation, causing such a problem that a large number of fine cracks are formed on the surface of lustrous polycarbonate.

Therefore, various optical stabilizers have been used to cope with this. There are proposed a large number of molded products obtained by molding a cover layer containing an ultraviolet absorbent through co- extrusion to protect the surface of polycarbonate resin (patent document 1 and the like) . However, a certain measure of effect is obtained for weatherability but coloring by high- temperature processing is not solved yet and must be further improved.

To mold the polycarbonate resin into a sheet or film form, molten polycarbonate resin obtained by heating at about 300°C is generally extruded from a T die lip and taken up by a cooling roll. To form a sheet at a high temperature of about 300°C, the polycarbonate resin and additives must have high heat resistance. Patent document 2 proposes a molded product whose weatherability and coloring by high-temperature processing are improved and which has a substrate layer and a cover layer molded by co-extruding polycarbonate resin. This molded product merely solves the above problem by containing a triazine-based ultraviolet absorbent in its surface layer having a thickness of 5 to 100 μm but the yellowing of the substrate layer at the time of high-temperature processing is not taken into consideration. Particularly in the case of a combination of a thick substrate layer and a cover layer having a thin surface layer portion formed on one side of the substrate layer, if the substrate layer is yellowed by co-extrusion processing, the obtained laminated sheet changes its color. When not less than 0.1 wt% of an ultraviolet absorbent is also contained in the substrate layer to provide heat stability at the time of extrusion, a large amount of the ultraviolet absorbent to be actually added is required unlike the surface layer, thereby causing a chemical cost problem.

To suppress the discoloration of the substrate layer with a heat stabilizer, patent document 3 proposes a method in which a combination of a specific phosphorus-based compound and a specific phenol-based compound is contained. However, this results in the addition of a large amount of the heat stabilizer due to the large thickness of a substrate, thereby causing such problems as the contamination of a roll at the time of molding a sheet and chemical costs.

Patent document 4 shows an example of a single-layer sheet which contains a cyclic imonoester-based compound and a phosphorus-based heat stabilizer. However, this sheet is obtained by extruding a powder, and it cannot be said that the suppression of the yellowing of the sheet extruded from a pellet is satisfactory. When extrusion molding is carried out by using a molten and extruded pellet, as the number of times of heat history becomes larger than that of processing from a powder, the more perfect suppression of yellowing is desired.

In a polycarbonate resin plate or film, a phenomenon that adjacent plates stick to each other, firmly adhere to each other and cannot be separated from each other easily due to high static friction resistance and surface smoothness, that is, a blocking phenomenon occurs very often. To prevent this blocking phenomenon, a polycarbonate resin plate having a specific thickness and containing inorganic powders in a surface layer made of polycarbonate resin is disclosed by patent document 5. However, patent document 5 does not take into consideration coloring by high-temperature processing.

Therefore, the development of a polycarbonate resin laminated sheet which rarely yellows when the sheet is melt extrusion molded from a polycarbonate pellet, has such high weatherability that it can be used outdoors and is suitable for use as a construction material has been desired.

(patent document 1) JP-A 01-165419
(patent document 2) JP-A 2000-264977
(patent document 3) JP-A 06-312493
(patent document 4) JP-A 2006-028442
(patent document 5) JP-A 2006-002120

Summary of the Invention

It is an object of the present invention to provide a laminated sheet which contains a polycarbonate resin and is excellent in weatherability and color. It is another object of the present invention to provide a process of manufacturing the laminated sheet.

The inventors of the present invention have found that when a resin composition (A) for a substrate layer which contains a polycarbonate resin and a specific thioether-based compound and a resin composition (B) for a cover layer which contains a polycarbonate resin and a specific ultraviolet absorbent are co-extruded together while they are molten, a laminated sheet which can suppress the yellowing of a substrate layer by heat history and is excellent in color and weatherability is obtained. The present invention has been accomplished based on this finding.

That is, according to the present invention, the following inventions are provided.

1. A laminated sheet having a substrate layer as thick as 0. 05 to 10 mm and a cover layer which is formed on at least one side of the substrate layer and as thick as 0.01 to 1 mm, wherein

(i) the substrate layer contains 100 parts by weight of a polycarbonate resin and 0.005 to 0.1 part by weight of at least one thioether- based compound selected from the group consisting of compounds represented by the following formulas (1) and (2) :

$$(R^1\text{- S- }CH_2\text{- }CH_2\text{- C (O) O- }CH_2)_4\text{- C} \qquad (1)$$

[$R^1$'s may be the same or different and each a linear or branched hydrocarbon group having 4 to 20 carbon atoms]

$$(R^2\text{- O- C (O)- }CH_2\text{- }CH_2\text{- })_2\text{- S} \qquad (2)$$

[$R^2$'s may be the same or different and each a linear or branched hydrocarbon group having 6 to 22 carbon atoms] ; and (ii) the cover layer contains 100 parts by weight of a polycarbonate resin and totaled 2 to 10 parts by weight of at least one ultraviolet absorbent selected from the group consisting of a benzotriazole- based compound having a molecular weight of not less than 380, a triazine- based compound having a molecular weight of not less than 400 and a cyclic iminoester- based compound represented by the following formula (5) :

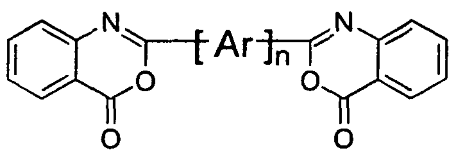

(5)

[Ar is a divalent aromatic hydrocarbon residue having 6 to 12 carbon atoms and may contain a hetero atom, and n is 0 or 1] .

2. The laminated sheet according to the above paragraph 1, wherein the substrate layer further contains at least one hindered phenol compound selected from the group consisting of compounds represented by the following formulas (3) and (4):

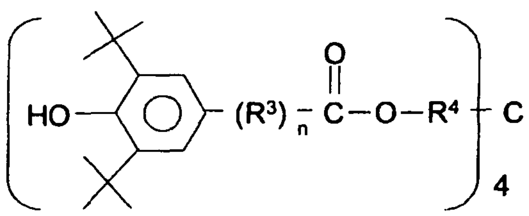

(3)

[$R^3$ and $R^4$ are each independently a linear hydrocarbon group having 1 to 6 carbon atoms, and n is an integer of 2 to 6]

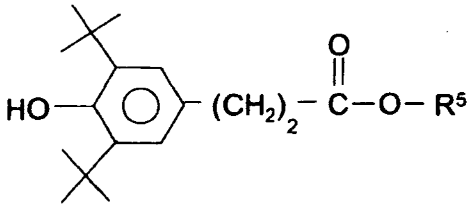

(4)

[$R^5$ is a linear or branched hydrocarbon group having 16 to 22 carbon atoms],
and the total content of the thioether-based compound and the hindered phenol compound is 0.005 to 0.1 part by weight based on 100 parts by weight of the polycarbonate resin.

3. The laminated sheet according to the above paragraph 1, wherein the substrate layer contains 0.005 to 2.0 parts by weight of a release agent based on 100 parts by weight of the polycarbonate resin.

4. The laminated sheet according to the above paragraph 1, wherein the substrate layer contains 0.05 to 1.5 ppm of a bluing agent.

5. The laminated sheet according to the above paragraph 1, wherein the cover layer contains 0.1 to 3 parts by weight of an antiblocking agent based on 100 parts by weight of the polycarbonate resin.

6. A process of manufacturing a laminated sheet, comprising laminating together

(i) a sheet obtained by melt extruding (A) a resin composition comprising 100 parts by weight of a polycarbonate resin and 0.005 to 0.1 part by weight of at least one thioether- based compound selected from the group consisting of compounds represented by the following formulas (1) and (2) :

$$(R^1\text{- S- }CH_2\text{- }CH_2\text{- C (O) O- }CH_2)_4\text{- C} \qquad (1)$$

[$R^1$'s may be the same or different and each a linear or branched hydrocarbon group having 4 to 20 carbon atoms]

$$(R^2\text{- O- C (O)- }CH_2\text{- }CH_2\text{- })_2\text{- S} \qquad (2)$$

[$R^2$'s may be the same or different and each a linear or branched hydrocarbon group having 6 to 22 carbon atoms] , and

(ii) a film obtained by melt extruding (B) a resin composition comprising 100 parts by weight of a polycarbonate resin and 2 to 10 parts by weight of at least one ultraviolet absorbent selected from the group consisting of a benzotriazole-based compound having a molecular weight of not less than 380, a triazine-based compound having a molecular weight of not less than 400 and a cyclic iminoester-based compound represented by the following formula (5):

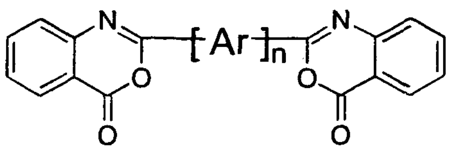

(5)

[Ar is a divalent aromatic hydrocarbon residue having 6 to 12 carbon atoms and may contain a hetero atom, and n is 0 or 1]
while they are molten.

7. The manufacturing process according to the above paragraph 6, wherein the resin composition (A) further comprises at least one hindered phenol compound selected from the group consisting of compounds represented by the following formulas (3) and (4):

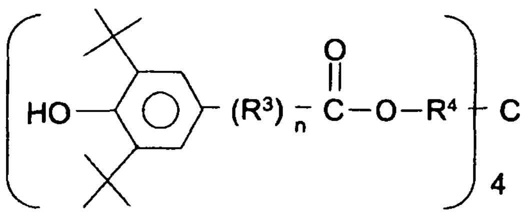

(3)

[$R^3$ and $R^4$ are each independently a linear hydrocarbon group having 1 to 6 carbon atoms, and n is an integer of 2 to 6]

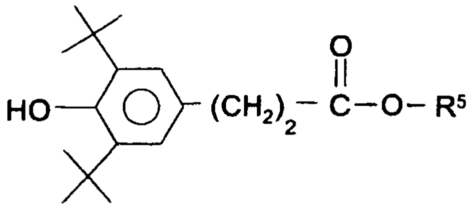

(4)

[$R^5$ is a linear or branched hydrocarbon group having 16 to 22 carbon atoms],
and the total content of the thioether-based compound and the hindered phenol compound is 0.005 to 0.1 part by weight based on 100 parts by weight of the polycarbonate resin.
8. The manufacturing method according to the above paragraph 6, wherein the resin compositions (A) and (B) are pellets.

Detailed Description of the Preferred Embodiment

The present invention will be described in detail hereinunder.

[polycarbonate resin]

The polycarbonate resin (may be simply referred to as "polycarbonate" hereinafter) used in the laminated sheet of the present invention is obtained by reacting a diphenol with a carbonate precursor. Examples of the reaction include interfacial polycondensation, melt ester interchange, the solid-phase ester interchange of a carbonate prepolymer and the ring-opening polymerization of a cyclic carbonate compound.

Examples of the diphenol include hydroquinone, resorcinol, 4, 4'- biphenol, 1, 1- bis (4- hydroxyphenyl) ethane, 2, 2- bis (4- hydroxyphenyl) propane (commonly known as "bisphenol A") , 2, 2- bis (4- hydroxy- 3- methylphenyl) propane, 2, 2- bis (4- hydroxyphenyl) butane, 1, 1- bis (4- hydroxyphenyl)- 1- phenylethane, 1, 1- bis (4- hydroxyphenyl) cyclohexane, 1, 1- bis (4- hydroxyphenyl)- 3, 3, 5- trimethylcyclohexane, 2, 2- bis (4- hydroxyphenyl) pentane, 4, 4'- (p-phenylenediisopropylidene) diphenol, 4, 4'- (m- phenylenediisopropylidene) diphenol, 1, 1- bis (4- hydroxyphenyl)- 4-isopropylcyclohexane, bis (4- hydroxyphenyl) oxide, bis (4- hydroxyphenyl) sulfide, bis (4- hydroxyphenyl) sulfoxide, bis (4- hydroxyphenyl) sulfone, bis (4- hydroxyphenyl) ketone, bis (4- hydroxyphenyl) ester, 2, 2- bis (3, 5- dibromo- 4-hydroxyphenyl) propane, bis (3, 5- dibromo- 4- hydroxyphenyl) sulfone, bis (4- hydroxy- 3- methylphenyl) sulfide, 9, 9-bis (4- hydroxyphenyl) fluorene and 9, 9- bis (4- hydroxy- 3- methylphenyl) fluorene. Out of these, bis (4- hydroxyphenyl) alkanes, especially bisphenol A (may be abbreviated as "BPA" hereinafter) is commonly used.

In the present invention, special polycarbonates manufactured by using other diphenols may be used as the component A, besides bisphenol A-based polycarbonates which are general-purpose polycarboantes.

For example, polycarbonates (homopolymers or copolymers) obtained by using
4, 4'- (m- phenylenediisopropylidene) diphenol (may be abbreviated as "BPM" hereinafter) ,
1, 1- bis (4- hydroxyphenyl) cyclohexane,
1, 1- bis (4- hydroxyphenyl)- 3, 3, 5- trimethylcyclohexane (may be abbreviated as "Bis- TMC" hereinafter) ,
9, 9- bis (4- hydroxyphenyl) fluorene and
9, 9- bis (4- hydroxy- 3- methylphenyl) fluorene (may be abbreviated as "BCF" hereinafter) as part or all of the diphenol component are suitable for use in fields in which the requirements for stability to dimensional change by water absorption and form stability are very strict. These diphenols except BPA are used in an amount of preferably not less than 5 mol%, particularly preferably not less than 10 mol% of the whole diphenol component constituting the polycarbonate.

Particularly when high stiffness and excellent resistance to hydrolysis are required, the polycarbonate resin is particularly preferably one of the following copolycarbonates (1) to (3).

(1) A copolycarbonate which comprises 20 to 80 mol% (preferably 40 to 75 mol%, more preferably 45 to 65 mol%) of BPM and 20 to 80 mol% (preferably 25 to 60 mol%, more preferably 35 to 55 mol%) of BCF based on 100 mol% of the diphenol component constituting the polycarbonate.
(2) A copolycarbonate which comprises 10 to 95 mol% (preferably 50 to 90 mol%, more preferably 60 to 85 mol%) of BPA and 5 to 90 mol% (preferably 10 to 50 mol%, more preferably 15 to 40 mol%) of BCF based on 100 mol% of the diphenol component constituting the polycarbonate.
(3) A copolycarbonate which comprises 20 to 80 mol% (preferably 40 to 75 mol%, more preferably 45 to 65 mol%) of BPM and 20 to 80 mol% (preferably 25 to 60 mol%, more preferably 35 to 55 mol%) of Bis-TMC based on 100

mol% of the diphenol component constituting the polycarbonate.

These special polycarbonates may be used alone or in combination of two or more. They may be mixed with a commonly used bisphenol A type polycarbonate.

The production processes and characteristic properties of these special polycarbonates are detailed, for example, in JP-A 6-172508, JP-A 8-27370, JP-A 2001-55435 and JP-A 2002-117580.

Out of the above polycarbonates, polycarbonates whose water absorption coefficient and Tg (glass transition temperature) have been adjusted to the following ranges by controlling their compositions have high resistance to hydrolysis and rarely warp after molding. Therefore, they are particularly preferred in fields in which form stability is required.

(i) A polycarbonate having a water absorption coefficient of 0.05 to 0.15 %, preferably 0.06 to 0.13 % and a Tg of 120 to 180°C, or
(ii) a polycarbonate having a Tg of 160 to 250°C, preferably 170 to 230°C and a water absorption coefficient of 0.10 to 0.30 %, preferably 0.13 to 0.30 %, more preferably 0.14 to 0.27 %.

The water absorption coefficient of a polycarbonate is a value obtained by measuring the moisture content of a disk-like test specimen having a diameter of 45 mm and a thickness of 3.0 mm after the specimen is immersed in 23°C water for 24 hours in accordance with ISO62-1980. Tg (glass transition temperature) is a value measured with a differential scanning calorimeter (DSC) in accordance with JIS K7121.

The carbonate precursor is a carbonyl halide, carbonate ester or haloformate, as exemplified by phosgene, diphenyl carbonate and dihaloformates of a diphenol.

For the manufacture of a polycarbonate from a diphenol and a carbonate precursor by interfacial polymerization, a catalyst, a terminal capping agent and an antioxidant for preventing the oxidation of the diphenol may be optionally used. The polycarbonate may be a branched polycarbonate obtained by copolymerizing a polyfunctional aromatic compound having 3 or more aromatic groups. Examples of the polyfunctional aromatic compound having 3 or more aromatic groups used herein include
1, 1, 1- tris (4- hydroxyphenyl) ethane and
1, 1, 1- tris (3, 5- dimethyl- 4- hydroxyphenyl) ethane.

When the polyfunctional compound forming a branched polycarbonate is contained, its amount is preferably 0.001 to 1 mol%, more preferably 0.005 to 0.9 mol%, particularly preferably 0.01 to 0.8 mol% based on the whole amount of the polycarbonate. Particularly in the case of melt ester interchange, a branched structure may be produced by a side reaction. The amount of this branched structure is also preferably 0.001 to 1 mol%, more preferably 0.005 to 0.9 mol%, particularly preferably 0.01 to 0.8 mol% based on the whole amount of the polycarbonate. The amount of the branched structure can be calculated by $^1$H-NMR measurement.

The polycarbonate resin may be a polyester carbonate obtained by copolymerizing an aromatic or aliphatic (including alicyclic) bifunctional carboxylic acid, a copolycarbonate obtained by copolymerizing a bifunctional alcohol (including an alicyclic bifunctional alcohol) or a polyester carbonate obtained by copolymerizing the bifunctional carboxylic acid and the bifunctional alcohol. It may be a mixture of two or more of the obtained polycarbonates.

The aliphatic bifunctional carboxylic acid used herein is preferably $\alpha$, $\omega$-dicarboxylic acid. Preferred examples of the aliphatic bifunctional carboxylic acid include linear saturated aliphatic dicarboxylic acids such as sebacic acid (decanedioic acid), dodecanedioic acid, tetradecanedioic acid, octadecanedioic acid and icosanedioic acid, and alicyclic dicarboxylic acids such as cyclohexanedicarboxylic acid. The bifunctional alcohol is preferably an alicyclic diol such as cyclohexanedimethanol, cyclohexanediol or tricyclodecanedimethanol.

Further, in the present invention, a polycarbonate- polyorganosiloxane copolymer obtained by copolymerizing a polyorganosiloxane unit may be used as the polycarbonate resin.

The polycarbonate may be a mixture of two or more polycarbonates such as polycarbonates obtained from different diphenols, a polycarbonate containing a branched component, a polyester carbonate and a polycarbonate-polyorganosiloxane copolymer. A mixture of two or more polycarbonates manufactured by different production processes or by using different terminal capping agents may also be used.

In the polymerization reaction of the polycarbonate, the reaction by the interfacial polycondensation process is generally a reaction between a diphenol and phosgene in the presence of an acid binder and an organic solvent. Examples of the acid binder include alkali metal hydroxides such as sodium hydroxide and potassium hydroxide, and amine compounds such as pyridine. Examples of the organic solvent include halogenated hydrocarbons such as methylene chloride and chlorobenzene. A catalyst such as a tertiary amine, quaternary ammonium compound or quaternary phosphonium compound as exemplified by triethylamine, tetra-n-butylammonium bromide and tetra-n-butylphosphonium bromide may be used to promote the reaction. The reaction temperature is generally 0 to 40°C, the reaction time is about 10 minutes to 5 hours, and pH during the reaction is preferably kept at 9 or more.

In the polymerization reaction, a terminal capping agent is generally used. A monofunctional phenol may be used as the terminal capping agent. The monofunctional phenol is preferably phenol, p-tert-butylphenol or p-cumylphenol. Further examples of the monofunctional phenol include monofunctional phenols whose nucleus is substituted by a long-chain alkyl group having 10 or more carbon atoms such as decyl phenol, dodecyl phenol tetradecyl phenol, hexadecyl phenol, octadecyl phenol, eicosyl phenol, docosyl phenol and triacontyl phenol. The phenol has the effect of improving fluidity and resistance to hydrolysis. These terminal capping agents may be used alone or in combination of two or more.

The melt ester interchange reaction is generally an ester interchange reaction between a diphenol and a carbonate ester. This reaction is carried out by mixing together the diphenol and the carbonate ester under heating in the presence of an inert gas and distilling off the formed alcohol or phenol. The reaction temperature which differs according to the boiling point of the formed alcohol or phenol is 120 to 350 °C in most cases. The inside pressure of the reaction system is reduced to $1.33 \times 10^3$ to 13.3 Pa in the latter stage of the reaction to facilitate the distillation-off of the formed alcohol or phenol. The reaction time is generally about 1 to 4 hours.

Examples of the above carbonate ester include esters such as an aryl group having 6 to 10 carbon atoms, aralkyl group and alkyl group having 1 to 4 carbon atoms all of which may have a substituent. Out of these, diphenyl carbonate is particularly preferred.

A polymerization catalyst may be used to accelerate the polymerization rate. Examples of the polymerization catalyst include alkali metal compounds such as sodium hydroxide, potassium hydroxide, and sodium salts and potassium salts of a diphenol; alkali earth metal compounds such as calcium hydroxide, barium hydroxide and magnesium hydroxide; and nitrogen-containing basic compounds such as tetramethylammonium hydroxide, tetraethylammonium hydroxide, trimethylamine and triethylamine. Further, catalysts used for esterification reaction and ester interchange reaction such as alkoxides of alkali (earth) metals, organic acid salts of alkali (earth) metals, boron compounds, germanium compounds, antimony compounds, titanium compounds and zirconium compounds may also be used. These catalysts may be used alone or in combination of two or more. The amount of the catalyst is preferably $1 \times 10^{-9}$ to $1 \times 10^{-5}$ equivalent, more preferably $1 \times 10^{-8}$ to $5 \times 10^{-6}$ equivalent based on 1 mol of the diphenol as the raw material.

In the melt ester interchange reaction, to reduce the number of the phenolic terminal groups of the formed polycarbonate, a compound such as 2-chlorophenylphenyl carbonate, 2-methoxycarbonylphenylphenyl carbonate or 2-ethoxycarbonylphenylphenyl carbonate may be added in the latter stage or at the end of the polycondensation reaction.

Further, a deactivator is preferably used to neutralize the activity of the catalyst in the melt ester interchange process. The amount of the deactivator is preferably 0.5 to 50 mols based on 1 mol of the residual catalyst. The deactivator is used in an amount of preferably 0.01 to 500 ppm, more preferably 0.01 to 300 ppm, particularly preferably 0.01 to 100 ppm based on the polycarbonate after polymerization. Preferred examples of the deactivator include phosphonium salts such as tetrabutylphosphonium dodecylbenzenesulfonate and ammonium salts such as tetraethylammonium dodecylbenzalsulfate.

The viscosity average molecular weight of the polycarbonate is not particularly limited. However, the viscosity average molecular weight is preferably $1.0 \times 10^4$ to $5.0 \times 10^4$, more preferably $1.2 \times 10^4$ to $3.0 \times 10^4$, much more preferably $1.5 \times 10^4$ to $2.8 \times 10^4$ because when the viscosity average molecular weight is lower than $1.0 \times 10^4$, strength lowers and when the viscosity average molecular weight is higher than $5.0 \times 10^4$, moldability degrades. In this case, it is possible to mix a polycarbonate having a viscosity average molecular weight outside the above range as long as moldability is maintained. For example, it is possible to mix a polycarbonate component having a viscosity average molecular weight higher than 50,000.

The viscosity average molecular weight M in the present invention is calculated based on the following equation from the specific viscosity ($\eta_{sp}$) of a solution containing 0.7 g of the polycarbonate resin dissolved in 100 ml of methylene chloride at 20°C which is obtained with an Ostwald viscometer based on the following equation.

$$\text{Specific viscosity } (\eta_{sp}) = (t - t_0)/t_0$$

[to is a time (seconds) required for the dropping of methylene chloride and t is a time (seconds) required for the dropping of a sample solution]

$\eta_{sp}/c = [\eta] + 0.45 \times [\eta]^2 C$ ([η] represents an intrinsic viscosity)

$$[\eta] = 1.23 \times 10^{-4} M^{0.83}$$

c = 0.7

To measure the viscosity average molecular weight of the resin composition of the present invention, the following procedure is taken. That is, the resin composition is dissolved in methylene chloride in a weight ratio of 1:20

to 1:30, soluble matter is collected by cerite filtration, the solution is removed, and the soluble matter is dried completely so as to obtain a methylene chloride-soluble solid. 0.7 g of the solid is dissolved in 100 ml of methylene chloride to measure the specific viscosity ($\eta_{sp}$) of the obtained solution at 20°C with an Ostwald viscometer so as to calculate its viscosity average molecular weight M from the above equation.

[thioether-based compound]

The thioether- based compound used in the substrate layer is at least one compound selected from the group consisting of compounds represented by the following formulas (1) and (2) . The thioether- based compound has the effect of the suppressing discoloration at the time of melt molding as a stabilizer for the polycarbonate resin.
(compound of the formula (1) )

$$(R^1\text{- S- }CH_2\text{- }CH_2\text{- C (O) O- }CH_2)_4\text{- C} \qquad (1)$$

In the formula (1), $R^1$'s may be the same or different and each a linear or branched hydrocarbon group having 4 to 20 carbon atoms.

In the formula (1) , $R^1$ is preferably an alkyl group having 4 to 20 carbon atoms, more preferably an alkyl group having 10 to 18 carbon atoms. Examples of the alkyl group include butyl group, pentyl group, hexyl group, octyl group, decyl group, dodecyl group, tetradecyl group, lauryl group, myristyl group and stearyl group. Examples of the compound of the formula (1) include pentaerythritol tetrakis (3- laurylthiopropionate) , pentaerythritol tetrakis (3- myristylthiopropionate) and pentaerythritol tetrakis (3- stearylthiopropionate) . Out of these, pentaerythritol tetrakis (3- laurylthiopropionate) and pentaerythritol tetrakis (3- myristylthiopropionate) are preferred, and pentaerythritol tetrakis (3- laurylthiopropionate) is particularly preferred.
(compound of the formula (2) )

$$(R^2\text{- O- C (O)- }CH_2\text{- }CH_2\text{- })_2\text{- S} \qquad (2)$$

In the formula (2), $R^2$' s may be the same or different and each a linear or branched hydrocarbon group having 6 to 22 carbon atoms.

In the formula (2), $R^2$ is preferably an alkyl group having 6 to 22 carbon atoms, more preferably an alkyl group having 10 to 18 carbon atoms. Examples of the alkyl group include hexyl group, heptyl group, octyl group, decyl group, dodecyl group, tetradecyl group, hexadecyl group and octadecyl group.

Examples of the compound of the formula (2) include dilauryl- 3, 3'- thiodipropionate,
dimyristyl- 3, 3'- thiodipropionate and
distearyl- 3, 3'- thiodipropionate. Out of these, dilauryl- 3, 3'- thiodipropionate and
dimyristyl- 3, 3'- thiodipropionate are preferred, and dimyristyl- 3, 3'- thiodipropionate is particularly preferred. The thioether- based compound is commercially available from Sumitomo Chemical Co., Ltd. under the trade names of Sumirizer TP- D and Sumirizer TPM and can be easily used.

[hindered phenol compound]

The substrate layer may contain a hindered phenol compound. The hindered phenol compound which is used in the substrate layer is preferably at least one compound selected from the group consisting of compounds represented by the formulas (3) and (4). The hindered phenol compound has the effect of suppressing discoloration at the time of melt molding as a stabilizer for the polycarbonate resin.

(compound of the formula (3))

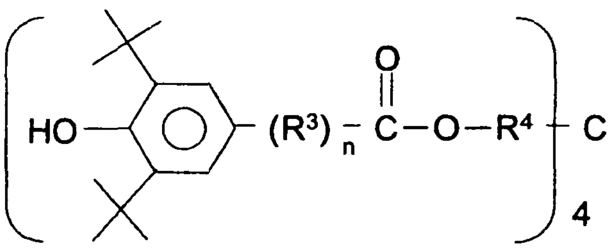

(3)

In the formula (3) , $R^3$ and $R^4$ are each independently a linear hydrocarbon group having 1 to 6 carbon atoms, and n is an integer of 2 to 6. In the formula (3) , $R^3$ and $R^4$ are each independently preferably an alkylene group having 1 to 6 carbon atoms, more preferably an alkylene group having 1 to 2 carbon atoms. Examples of $R^3$ and $R^4$ include methylene group, ethylene group, trimethylene group and tetramethylene group. Examples of the compound of the formula (3) include pentaerythritol
tetrakis [3- (3, 5) di- t- butyl- 4- hydroxyphenyl] propionate] .

(compound of the formula (4))

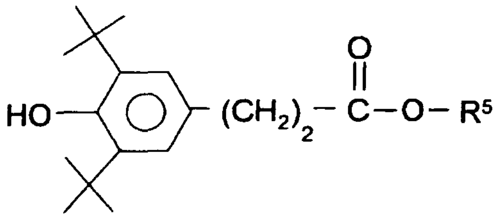

(4)

In the formula (4) , $R^5$ is a linear or branched hydrocarbon group having 16 to 22 carbon atoms. In the formula (4) , $R^5$ is preferably an alkyl group having 16 to 22 carbon atoms, more preferably an alkyl group having 17 to 19 carbon atoms. Examples of $R^5$ include hexadecyl group, heptadecyl group, octadecyl group, nonadecyl group, icosyl group, henicosyl group and dodecosyl group. Examples of the compound of the formula (4) include
octadecyl- 3- (3, 5- di- t- butyl- 4- hydroxyphenyl) propionate. The hindered phenol- based compound is commercially available from Ciba Specialty Chemicals Co. , Ltd. under the trade names of Irganox 1010 and Irganox 1076 and can be easily used.

(content of stabilizer)

The content of the thioether-based compound in the substrate layer is 0.005 to 0.1 part by weight, preferably 0.01 to 0.08 part by weight, more preferably 0.02 to 0.05 part by weight based on 100 parts by weight of the polycarbonate resin. When the content of the thioether-based compound is lower than 0.005 part by weight, its effect of suppressing discoloration at the time of molding becomes unsatisfactory disadvantageously.
When the substrate layer contains both a thioether-based compound and a hindered phenol-based compound, the total content of these in the substrate layer is also 0.005 to 0.1 part by weight, preferably 0.01 to 0.08 part by weight, more preferably 0.02 to 0.05 part by weight based on 100 parts by weight of the polycarbonate resin.
It is preferred that the thioether-based compound and the hindered phenol-based compound should be used alone because work at the time of producing a laminated sheet does not become complicated.

[ultraviolet absorbent]

The ultraviolet absorbent used in the cover layer is at least one ultraviolet absorbent selected from the group consisting of a benzotriazole-based compound having a molecular weight of not less than 380 (UV-i), a triazine-based compound having a molecular weight of not less than 400 (UV-ii) and a cyclic iminoester-based compound represented by the formula (5) (UV-iii). A benzotriazole-based ultraviolet absorbent having a molecular weight of less than 380 and a triazine-based ultraviolet absorbent having a molecular weight of less than 400 cannot provide a film for a cover layer which is uniform in thickness due to a reduction in the viscosity of the resin composition at the time of processing the film for the cover layer. The ultraviolet absorbent is preferably at least one ultraviolet absorbent selected from the group consisting of a benzotriazole-based ultraviolet absorbent having a molecular weight of 380 to 700 (UV-i), a triazine-based ultraviolet absorbent having a molecular weight of 400 to 700 (UV-ii) and a cyclic iminoester-based ultraviolet absorbent represented by the formula (5) (UV-iii). Even an ultraviolet absorbent having a molecular weight of not less than 380, for example, a benzophenone-based or hindered amine-based ultraviolet absorbent is inferior in the effect of improving weatherability.

(UV-i)

Examples of the benzotriazole- based ultraviolet absorbent having a molecular weight of not less than 380 (IV-i) include
2, 2- methylenebis [4- (1, 1, 3, 3- tetramethylbutyl)- 6- (2H- benz otriazol- 2- yl) phenol] having a molecular weight of 659 and 2- [2- hydroxy- 3, 5- bis (α, α- dimethylbenzyl) phenyl]- 2H- benzo triazole having a molecular weight of 447. They may be used alone or in combination of two or more.

(UV-ii)

Examples of the triazine- based ultraviolet absorbent having a molecular weight of not less than 400 include 2- (4, 6- diphenyl- 1, 3, 5- triazin- 2- yl)- 5- [(hexyl) oxy]- pheno 1 (such as TINUVIN1577 of Ciba Specialty Chemicals Co., Ltd.) . 2- (4, 6- bis (2, 4- dimethylphenyl)- 1, 3, 5- triazin- 2- yl)- 5- [(o ctyl) oxy]- phenol (such as CYASORB1164 of Sipro Kasei Co., Ltd.) . They may be used alone or in combination of two or more.

(UV-iii)

Examples of the cyclic iminoester- based ultraviolet absorbent include 2, 2'- bis (3, 1- benzoxazin- 4- one) (n = 0 in the above formula (5) ) ,
2, 2'- p- phenylenebis (3, 1- benzoxazin- 4- one) ,
2, 2'- m- phenylenebis (3, 1- benzoxazin- 4- one) ,
2, 2'- (4, 4'- diphenylene) bis (3, 1- benzoxazin- 4- one) ,
2, 2'- (2, 6- naphthalene) bis (3, 1- benzoxazin- 4- one) ,
2, 2'- (1, 5- naphthalene) bis (3, 1- benzoxazin- 4- one) ,
2, 2'- (2- methyl- p- phenylene) bis (3, 1- benzoxazin- 4- one) , 2, 2'- (2- nitro- p- phenylene) bis (3, 1- benzoxazin- 4- one) and
2, 2'- (2- chloro- p- phenylene) bis (3, 1- benzoxazin- 4- one) .
They may be used alone or in combination of two or more. Out of these, 2, 2'- p- phenylenebis (3, 1- benzoxazin- 4- one) , 2, 2'- (4, 4'- diphenylene) bis (3, 1- benzoxazin- 4- one) and 2, 2'- (2, 6- naphthalene) bis (3, 1- benzoxazin- 4- one) are preferably used.
A laminate which is free from initial coloring and has excellent transparency can be obtained by using these specific ultraviolet absorbents. The content of the ultraviolet absorbent is 2 to 10 parts by weight based on 100 parts by weight of the polycarbonate resin constituting the cover layer. When the content is lower than 2 parts by weight, the cover layer becomes inferior in weatherability and when the content is higher than 10 parts by weight, it is difficult to process the cover layer. The content of the ultraviolet absorbent is preferably 2.5 to 9 parts by weight, more preferably 3 to 8 parts by weight based on 100 parts by weight of the polycarbonate resin.

[antiblocking agent]

The cover layer preferably contains an antiblocking agent to prevent a phenomenon (blocking phenomenon) that adjacent plates stick to each other, adhere firmly to each other and cannot be easily separated from each other.
Inorganic particles can be used as the antiblocking agent. Examples of the antiblocking agent include calcium carbonate, glass balloon, shirasu balloon, fly ash balloon, alumina balloon and ceramic balloon. The content of the inorganic particle is preferably 0.1 to 3 parts by weight, more preferably 0.15 to 1 part by weight, more preferably 0.2 to 0.5 part by weight based on 100 parts by weight of the polycarbonate resin. Within the above range, an excellent antiblocking effect can be obtained.

[release agent]

To improve moldability, a release agent may be contained in the substrate layer (sheet), the cover layer (film) or both of them. The release agent preferably comprises not less than 90 wt% of an ester of an alcohol and a fatty acid. The ester is, for example, an ester of a monohydric alcohol and a fatty acid, and/or a partial ester or whole ester of a polyhydric alcohol and a fatty acid. The above ester of a monohydric alcohol and a fatty acid is preferably an ester of a monohydric alcohol having 1 to 20 carbon atoms and a saturated fatty acid having 10 to 30 carbon atoms. The partial ester or whole ester of a polyhydric alcohol and a fatty acid is preferably a partial ester or whole ester of a polyhydric alcohol having 1 to 25 carbon atoms and a saturated fatty acid having 10 to 30 carbon atoms.
Examples of the ester of a monohydric alcohol and a saturated fatty acid include stearyl stearate, palmityl palmitate, butyl stearate, methyl laurate and isopropyl palmitate. Out of these, stearyl stearate is particularly preferred.
Examples of the partial ester or whole ester of a polyhydric alcohol and a saturated fatty acid include monoglyceride stearate, diglyceride stearate, triglyceride stearate, monosorbitate stearate, monoglyceride behenate, pentaerythritol monostearate, pentaerythritol tetrastearate, pentaerythritol tetrapelargonate, propylene glycol monostearate, biphenyl biphenate, sorbitan monostearate, 2-ethylhexyl stearate and whole esters or partial esters of a dipentaerythritol such as dipentaerythritol hexastearate.

Out of these esters, monoglyceride stearate, triglyceride stearate, pentaerythritol tetrastearate and a mixture of triglyceride stearate and stearyl stearate are preferably used. Pentaerythritol tetrastearate and monoglyceride stearate are particularly preferably used.

The content of the above ester in the release agent is preferably not less than 90 wt%, more preferably not less than 95 wt% based on 100 wt% of the release agent.

The acid value of the fatty acid ester is preferably 3 or less, more preferably 2 or less. Monoglyceride stearate preferably has an acid value of 1.5 or less and a purity of not less than 95 wt%, particularly preferably an acid value of 1.2 or less and a purity of not less than 98 wt%. For the measurement of the acid value of the fatty acid ester, a known method may be employed.

Release agents except these esters include olefin-based waxes, olefin-based waxes having a carboxyl group and/or a carboxylic anhydride group, silicone oil, organopolysiloxanes, paraffin wax and beeswax.

The content of the release agent in the substrate layer (sheet), the cover layer (film) or both of them is preferably 0.005 to 2.0 parts by weight, more preferably 0.01 to 0.6 part by weight, more preferably 0.02 to 0.5 part by weight based on 100 parts by weight of the polycarbonate resin.

[phosphorus-based heat stabilizer]

A phosphorus-based heat stabilizer may be contained in the substrate layer (sheet), the cover layer (film) or both of them in an amount of 0.001 to 0.2 part by weight based on 100 parts by weight of the polycarbonate resin.

The phosphorus- based heat stabilizer is, for example, a phosphorous acid, phosphoric acid, phosphonous acid, phosphonic acid or ester thereof. Specific examples of the phosphorus- based heat stabilizer include triphenyl phosphite, tris (nonylphenyl) phosphite,
tris (2, 4- di- tert- butylphenyl) phosphite,
tris (2, 6- di- tert- butylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite,
bis (2, 6- di- tert- butyl- 4- methylphenyl) pentaerythritol diphosphite,
2, 2- methylenebis (4, 6- di- tert- butylphenyl) octyl phosphite, bis (nonylphenyl) pentaerythritol diphosphite,
bis (2, 4- di- tert- butylphenyl) pentaerythritol diphosphite, distearyl pentaerythritol diphosphite, tributyl phosphate, triethyl phosphate, trimethyl phosphate, triphenyl phosphate, diphenylmonoorthoxenyl phosphate, dibutyl phosphate, dioctyl phosphate, diisopropyl phosphate, dimethyl benzenephosphonate, diethyl benzenephosphonate, dipropyl benzenephosphonate,
tetrakis (2, 4- di- tert- butylphenyl)- 4, 4'- biphenylene diphosphonite,
tetrakis (2, 4- di- tert- butylphenyl)- 4, 3'- biphenylene diphosphonite,
tetrakis (2, 4- di- tert- butylphenyl)- 3, 3'- biphenylene diphosphonite,
bis (2, 4- di- tert- butylphenyl)- 4- phenyl- phenyl phosphonite and bis (2, 4- di- tert- butylphenyl)- 3- phenyl- phenyl phosphonite.

Out of these, tris (2, 4- di- tert- butylphenyl) phosphite, tris (2, 6- di- tert- butylphenyl) phosphite,
tetrakis (2, 4- di- tert- butylphenyl)- 4, 4'- biphenylene diphosphonite,
tetrakis (2, 4- di- tert- butylphenyl)- 4, 3'- biphenylene diphosphonite,
tetrakis (2, 4- di- tert- butylphenyl)- 3, 3'- biphenylene diphosphonite,
bis (2, 4- di- tert- butylphenyl)- 4- phenyl- phenyl phosphonite and bis (2, 4- di- tert- butylphenyl)- 3- phenyl- phenyl phosphonite are preferred.
Tetrakis (2, 4- di- tert- butylphenyl)- 4, 4'- biphenylene diphosphonite is particularly preferred.

[other hindered phenol compound]

A hindered phenol compound except the hindered phenol compounds represented by the above formulas (3) and (4) may be contained in the substrate layer (sheet), the cover layer (film) or both of them in an amount of 0.001 to 0.1 part by weight based on 100 parts by weight of the polycarbonate resin.

Examples of the hindered phenol compound include thiodiethylenebis [3- (3, 5- tert- butyl- 4- hydroxyphenyl) prop ionate] ,
N, N'- hexane- 1, 6- diylbis [3- (3, 5- di- tert- butyl- 4- hydroxyph enylpropionamide) and
ethylenebis (oxyethylene) bis [3- (5- tert- butyl- 4- hydroxy- m- tolyl) propionate.

[antistatic agent]

An antistatic agent may be contained in the substrate layer (sheet), the cover layer (film) or both of them.

Examples of the antistatic agent include polyether ester amides, ammonium salts of dodecylbenzenesulfonic acid, phosphonium salts of dodecylbenzenesulfonic acid, anhydrous monoglyceride maleate, anhydrous diglyceride maleate, carbon, graphite and metal powders. Further, partial esters of a polyhydric alcohol and a saturated fatty acid such as glycerin monostearate may also be included. The polyhydric alcohol and the fatty acid may have a low molecular weight or a high molecular weight, and an aromatic ring may be partially introduced into these. Not only the alcohol moiety but also the fatty acid moiety may have a branched structure. The amount of the antistatic agent is preferably 0.1 to 10 parts by weight based on 100 parts by weight of the polycarbonate resin.

[bluing agent]

A bluing agent may be contained in the substrate layer (sheet), the cover layer (film) or both of them in limits that do not impair the object of the present invention.

The bluing agent is effective in erasing the yellow tinge of the resin composition. Since a resin composition provided with weatherability comprises a certain amount of an ultraviolet absorbent, a resin product is apt to be tinged with yellow according to "the function and color of the ultraviolet absorbent". The blending of a bluing agent is very effective in providing a natural transparent impression especially to sheet products and lens products.

The content of the bluing agent is preferably 0.05 to 1.5 ppm, more preferably 0.1 to 1.2 ppm based on the resin composition constituting the substrate layer (sheet) or the cover layer (film).

Typical examples of the bluing agent include the PLAST Blue 8520 (compound of the following formula (a)), PLAST Violet 8855 (compound of the following formula (b)), and PLAST Red 8350, PLAST Red 8340, PLAST Red 8320 and OIL Green 5602 of Arimoto Kagaku Kogyo Co., Ltd., the MACROLEX Blue RR (compound of the following formula (c)) and MACROLEX Violet B (compound of the following formula (d)) of Bayer Co. , Ltd., the DIARESIN Blue N of Mitsubishi Chemical Co., Ltd., the SUMIPLAST Violet RR of Sumitomo Chemical Co., Ltd. and the Polysynthrene Blue RLS of Cliant Co., Ltd. Out of these, the compounds of the formulas (a) to (d) are preferred.

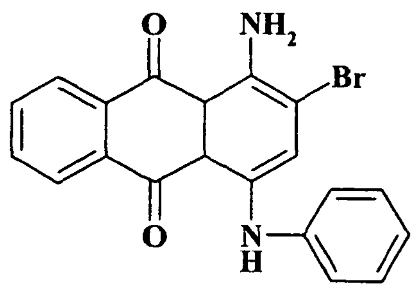

(a)

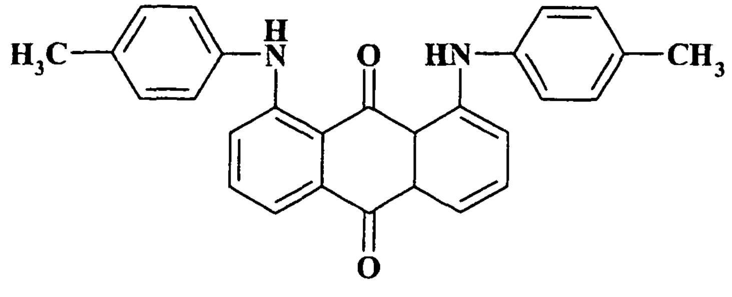

(b)

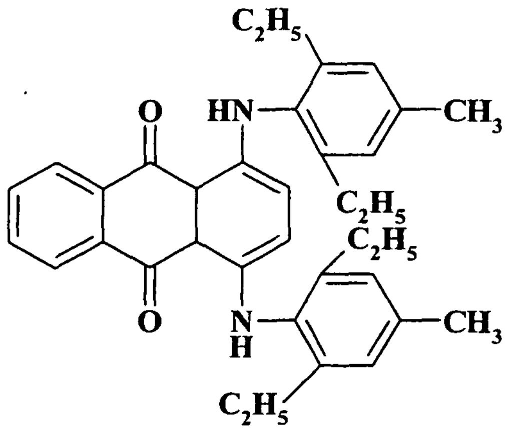

(c)

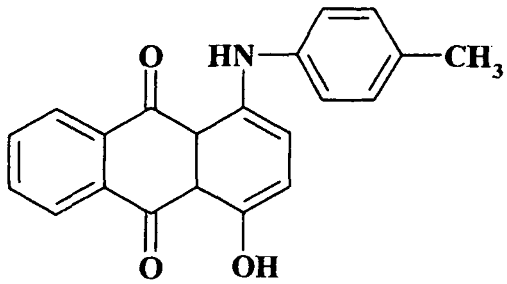

(d)

[flame retardant]

A flame retardant may be contained in the substrate layer (sheet), the cover layer (film) or both of them in limits that do not impair the object of the present invention. Examples of the flame retardant include halogenated bisphenol A polycarbonate-based flame retardants, organic salt-based flame retardants, halogenated aromatic phosphate-based flame retardants and aromatic phosphate-based flame retardants. At least one of these flame retardants can be used.

The halogenated bisphenol A polycarbonate-based flame retardants include tetrabromobisphenol A polycarbonate-based flame retardants and tetrabromobisphenol A-bisphenol A copolycarbonate-based flame retardants.

The organic salt- based flame retardants include dipotassium diphenylsulfone- 3, 3'- disulfonate, potassium diphenylsulfone- 3- sulfonate, sodium 2, 4, 5- trichlorobenzenesulfonate, potassium 2, 4, 5- trichlorobenzenesulfonate, potassium bis (2, 6- dibromo- 4- cumylphenyl) phosphate, sodium bis (4- cumylphenyl) phosphate, potassium bis (p- toluenesulfone) imide, potassium bis (diphenylphosphate) imide, potassium bis (2, 4, 6- tribromophenyl) phosphate, potassium bis (2, 4- dibromophenyl) phosphate, potassium bis (4- bromophenyl) phosphate, potassium diphenylphosphate, sodium diphenylphosphate, potassium perfluorobutanesulfonate, sodium or potassium laurylsulfate and sodium or potassium hexadecylsulfate.

The halogenated aromatic phosphate- based flame retardants include tris (2, 4, 6- tribromophenyl) phosphate, tris (2, 4- dibromophenyl) phosphate and tris (4- bromophenyl) phosphate.

The aromatic phosphate- based flame retardants include triphenyl phosphate, tris (2, 6- xylyl) phosphate, tetrakis (2, 6- xylyl) resorcin diphosphate, tetrakis (2, 6- xylyl) hydroquinone diphosphate, tetrakis (2, 6- xylyl)- 4, 4'- biphenol diphosphate, tetraphenylresorcin diphosphate, tetraphenylhydroquinone diphosphate, tetraphenyl- 4, 4'- biphenol diphosphate,

aromatic polyphosphates comprising resorcin and phenol as aromatic ring sources and having no phenolic OH group, aromatic polyphosphates comprising resorcin and phenol as aromatic ring sources and having a phenolic OH group, aromatic polyphosphates comprising hydroquinone and phenol as aromatic ring sources and having no phenolic OH group, aromatic polyphosphates comprising hydroquinone and phenol as aromatic ring sources and having a phenolic OH group, aromatic polyphosphates ("aromatic polyphosphates" hereinbelow means both aromatic polyphosphates having a phenolic OH group and aromatic polyphosphates having no phenolic OH group) comprising bisphenol A and phenol as aromatic ring sources, aromatic polyphosphates comprising tetrabromobisphenol A and phenol as aromatic ring sources, aromatic polyphosphates comprising resorcin and 2, 6- xylenol as aromatic ring sources, aromatic polyphosphates comprising hydroquinone and 2, 6- xylenol as aromatic ring sources, aromatic polyphosphates comprising bisphenol A and 2, 6- xylenol as aromatic ring sources, and aromatic polyphosphates comprising tetrabromobisphenol A and 2, 6- xylenol as aromatic ring sources.

[fluorescent dye]

In the present invention, the substrate layer (sheet) and the cover layer (film) have high transparency. Therefore, when a fluorescent brightener is further contained in the substrate layer (sheet), the cover layer (film) or both of them, high light transmission and a natural transparent impression can be provided and when a fluorescent brightener or fluorescent dye which emits light other than fluorescence is contained, a design effect making use of the color of emitted light can be provided.

Examples of the fluorescent dye (including the fluorescent brightener) used in the present invention include coumarin-based fluorescent dyes, benzopyran-based fluorescent dyes, perylene-based fluorescent dyes, anthraquinone-based fluorescent dyes, thioindigo-based fluorescent dyes, xanthene-based fluorescent dyes, xanthone-based fluorescent dyes, thioxanthene-based fluorescent dyes, thioxanthone-based fluorescent dyes, thiazine-based fluorescent dyes and diaminostylbene-based fluorescent dyes. Out of these, coumarin-based fluorescent dyes, benzopyran-based fluorescent dyes and perylene-based fluorescent dyes are preferred because they have high heat resistance and rarely deteriorate at the time of molding the polycarbonate resin. Coumarin-based fluorescent dyes, that is, fluorescent dyes made of coumarin derivatives are particularly preferred.

The content of the fluorescent dye (including the fluorescent brightener) is preferably 0.0001 to 3 parts by weight, more preferably 0.0005 to 1 part by weight, much more preferably 0.0005 to 0.5 part by weight, particularly preferably 0.001 to 0.5 part by weight, ideally 0.001 to 0.1 part by weight based on 100 parts by weight of the polycarbonate resin. Within the above range, excellent ultraviolet light resistance and color can be obtained together with heat stability and light transmittance.

[infrared absorbent, infrared reflecting agent]

In the present invention, an infrared absorbent or infrared reflecting agent may be contained in the substrate layer (sheet), the cover layer (film) or both of them. When the infrared absorbent or infrared reflecting agent is contained, a temperature rise in summer can be prevented efficiently. The infrared absorbent may be either an organic compound or an inorganic compound. Examples of the organic compound include dye-based compounds such as anthraquinone-based dyes and perylene-based dyes, aromatic amine compounds and aromatic immonium salt compounds. Examples of the inorganic compound include tungsten compounds and lanthanum compounds. Examples of the infrared reflecting agent include metal-based particles such as aluminum, gold, silver, copper, nickel, chromium and titanium oxide.

[process of manufacturing a laminated sheet]

The laminated sheet of the present invention can be manufacturing by laminating together a sheet prepared by melt extruding a resin composition (A) and a film prepared by melt extruding a resin composition (B) while they are molten.

The resin composition (A) for the substrate layer (sheet) can be prepared by blending together a polycarbonate resin, a thioether-based compound and other additives.

The resin composition (A) may contain at least one hindered phenol compound selected from the group consisting of compounds of the formulas (3) and (4). A blend product of the thus obtained resin composition powder or pellet is preferably extrusion molded after it is formed into a pellet by a melt extruder.

The resin composition (B) for the cover layer (film) can also be prepared by blending together a polycarbonate resin, an ultraviolet absorbent and other additives. A blend product of the thus obtained resin composition powder or pellet is preferably extrusion molded after it is formed into a pellet by a melt extruder.

To blend the polycarbonate resin with the additives, any means may be used. For example, they are blended together by a tumbler, twin-cylinder mixer, super mixer, Nauter mixer, Banbury mixer, kneading roll or extruder. They

may be blended together in one stage or two or more stages. To blend them together in two or more stages, after part of the polycarbonate resin powder or pellet is blended with the additives, that is, the additives are diluted with the polycarbonate resin powder to prepare a master batch of the additives, final blending is carried out by using the master batch.

To blend them together in one stage, a mixture of predetermined amounts of additives is blended with the polycarbonate resin powder or pellet, or predetermined amounts of additives are measured separately, added to and mixed with the polycarbonate resin powder or pellet one after another. Further, according to the types of the additives, they may be added to and injected into an extruder directly. In this case, the additives can be injected into the extruder after they are molten by heating.

In the solution polymerization process (interfacial polymerization process), a method in which an organic solvent solution of the polycarbonate resin after the end of polymerization is introduced into stirred hot water to manufacture a polycarbonate powder in a stirred stream is often employed. In this case, the additives may be added to and dissolved into the organic solvent solution of the polycarbonate resin to be introduced into the polycarbonate resin.

Lamination is carried out while they are molten. Lamination can be carried out by coextrusion. As for coextrusion, the substrate layer (sheet) and the cover layer (film) extruded from two or more extruders are laminated together by a roll or co-extruded from a single extrusion die by using a multiflow nozzle.

The thickness of the substrate layer made of the resin composition (A) containing a thioether-based compound is 0.05 to 10 mm, preferably 1 to 8 mm, more preferably 2 to 5 mm. The thickness of the cover layer made of the resin composition (B) containing an ultraviolet absorbent is 0.01 to 1 mm, preferably 0.01 to 0.5 mm, more preferably 0.02 to 0.1 mm. The total thickness of the laminated sheet is preferably 0.06 to 11 mm, more preferably 1 to 8 mm, much more preferably 2 to 6 mm. The thickness of the cover layer is preferably smaller than the thickness of the substrate layer.

The laminated sheet of the present invention can be advantageously used as a construction sheet such as a corrugated sheet having a thickness of about 1.5 mm or a flat sheet having a thickness of about 5.0 mm.

Examples

The following examples are provided for the purpose of further illustrating the present invention but are in no way to be taken as limiting. "Parts" and "%" are based on weight.

(Examples 1 to 7, Comparative Examples 1 to 6)

Additives shown in Table 1 were mixed with a polycarbonate resin powder (viscosity average molecular weight of 24, 000) manufactured from bisphenol A and phosgene by interfacial polycondensation in ratios shown in Table 1 by a blender to prepare raw materials for the cover layer and the substrate layer. The obtained powders for the cover layer and the substrate layer were each melt kneaded by a vented extruder at 250 to 300°C to obtain pellets for the cover layer and the substrate layer.

The pellet for the substrate layer was supplied into an extruder having a screw diameter of 90 mm to be molten at 250 to 300°C while the pellet for the cover layer was supplied into an auxiliary extruder having a screw diameter of 30 mm to be molten at 250 to 300°C and then, these pellets were co-extruded into a laminate through a T die. Specular metal rolls (roll diameter of 300 mm) were used as first to third rolls, the temperatures of the first roll, the second roll and the third roll were set to 140°C, 150°C and 145°C, respectively, and the extruded molten resin was sandwiched between the first roll and the second roll, pressed at a linear pressure of 6 MPa·cm and passed over the third roll while it was contacted to the third roll between the second roll and the third roll to mold a laminated sheet having a cover layer thickness of 50 $\mu$m, a substrate layer thickness of 5 mm and a width of 1,000 mm.

The properties of the obtained coextruded laminated sheet were evaluated, and the results are shown in Tables 1 and 2. The used compounds and evaluation methods are given below.

Components

[1] ultraviolet absorbent:

(i)
2, 2- methylenebis [4- (1, 1, 3, 3- tetramethylbutyl)- 6- (2H- benz otriazol- 2- yl) phenol] (LA- 31 (trade name) of Adeca Co., Ltd.)
(ii)
2- (4, 6- diphenyl- 1, 3, 5- triazin- 2- yl)- 5- [(hexyl) oxy]- pheno 1 (TINUVIN1577FF (trade name) of Ciba specialty

Chemicals Co., Ltd.)
(iii) 2, 2'- p- phenylenebis (3, 1- benzoxazin- 4- one) (CEi- P (trade name) of Takemoto Yushi Co., Ltd.)

[2] antiblocking agent:

(i) calcium carbonate (Cipron A (trade name) of Cipro Kasei Co., Ltd., average diameter of 5 μm)

[3] heat stabilizer:

(1) thioether-based compound

(i) pentaerythritol tetrakis (3- laurylthiopropionate) (Sumirizer TP- D (trade name) of Sumitomo Chemical Co., Ltd.)

(2) hindered phenol-based compound

(i) pentaerythritol tetrakis [3- (3, 5) di- tert- butyl- 4- hydroxyphenyl] propionate ] (Irganox 1010 (trade name) of Ciba Specialty Chemicals Co. , Ltd.)

(3) phosphorus-based compound

(i) tris (2, 4- di- tert- butylphenyl) phosphite (Irgafos 168 of Ciba Specialty Chemicals Co., Ltd.)
(ii)
tetrakis- 2, 4- di- tert- butylphenyl- 4, 4'- biphenylenediphosp hinic acid (Fostanox P- EPQ (trade name) of Cliant Japan Co., Ltd.)

[4] release agent:

(i) glycerin fatty acid ester (Roxiol VPG861 (trade name) of Cognis Japan Co., Ltd.)

[5] bluing agent:

(i) anthraquinone-based compound (MACROLEX Violet B (trade name) of Bayer AG.)
evaluation methods

(1) Blue tinge of pellet:
The blue tinge of the pellet for the substrate layer was evaluated based on its b value measured by a C light source reflection method using the SE-2000 color difference meter of Nippon Denshoku Co., Ltd. As the blue tinge becomes stronger, the b value becomes smaller.

(2) Blue tinge of laminated sheet:
The color of a 5 mm-thick laminated sheet obtained in each Example was measured by the C light source reflection method using the SE-2000 color difference meter of Nippon Denshoku Co., Ltd. As the blue tinge becomes stronger, the b value becomes smaller. ○ and × in the table are the results of visual inspection based on the following criteria. ○ : blue tinge is perceived when a laminate of three 5 mm-thick sheets is observed from its side
X : No color is perceived when a laminate of three 5 mm-thick sheets is observed from its side

(3) Ultraviolet light resistance (weatherability):
A 5 mm-thick laminated sheet obtained in each Example was sprayed with water at a black panel temperature of 63 °C and a humidity of 50 % for 18 minutes and for 102 minutes, and this 120-minute cycle was repeated for 1,000 hours to measure a change in color (ΔYI value) before and after this. The YI value was calculated from X, Y and Z values measured by a C light source transmission method using the SE-20000 color difference meter of Nippon Denshoku Co., Ltd. based on the following equation in accordance with ASTM-E1925. As the ΔYI value becomes larger, the yellow tinge of the molded sheet becomes stronger. ○ and × in the table were judged based on the following criteria.

$$YI = [100(1.28X - 1.06Z)]/Y$$

$\Delta$YI = YI (after 1,000 hours of treatment) - YI (before treatment)
○: $\Delta$YI value of less than 5
×: $\Delta$YI value of not less than 5

(4) slipperiness:
The 5 mm-thick laminated sheet obtained in each Example was placed on the surface of a specimen having a contact area of 40 $cm^2$, and a test was carried out at a rate of 50 mm/min to obtain its dynamic friction coefficient. ○ and × in the table were judged based on the following criteria.
○ : dynamic friction coefficient of less than 0.3
× : dynamic friction coefficient of not less than 0.3

(5) contamination of roll:
The cloudiness of the first roll after 6 hours of continuous molding was checked visually. × indicates that the cloudiness is distinct to such an extent that it affects the appearance of a product, Δ indicates that the cloudiness is distinct to such an extent that it does not affect the product, and ○ indicates that the cloudiness is not distinct.

Table 1

<table>
<tr><th colspan="3"></th><th></th><th>Ex.1</th><th>Ex.2</th><th>Ex.3</th><th>Ex.4</th><th>Ex.5</th><th>Ex.6</th><th>Ex.7</th></tr>
<tr><td rowspan="5">Cover layer (B)</td><td>Main component</td><td>PC</td><td>pbw</td><td>100</td><td>100</td><td>100</td><td>100</td><td>100</td><td>100</td><td>100</td></tr>
<tr><td>Antiblocking component</td><td>(i)</td><td>pbw</td><td>0.35</td><td>0.35</td><td>0.35</td><td>0.35</td><td>0.35</td><td>0.35</td><td>0.35</td></tr>
<tr><td rowspan="3">Ultraviolet absorbent component</td><td>(i)</td><td>pbw</td><td>3</td><td>3</td><td>6</td><td>3</td><td>3</td><td></td><td></td></tr>
<tr><td>(ii)</td><td>pbw</td><td></td><td></td><td></td><td></td><td></td><td>3</td><td></td></tr>
<tr><td>(iii)</td><td>pbw</td><td></td><td></td><td></td><td></td><td></td><td></td><td>3</td></tr>
<tr><td rowspan="7">Substrate layer (A)</td><td>Main component</td><td>PC</td><td>pbw</td><td>100</td><td>100</td><td>100</td><td>100</td><td>100</td><td>100</td><td>100</td></tr>
<tr><td rowspan="4">Heat stabilizer component</td><td>Thioether-based</td><td>pbw</td><td>0.02</td><td>0.05</td><td>0.02</td><td>0.02</td><td>0.03</td><td>0.03</td><td>0.03</td></tr>
<tr><td>Hindered phenol-based</td><td>pbw</td><td></td><td></td><td></td><td>0.01</td><td>0.02</td><td></td><td></td></tr>
<tr><td>Phosphorus-based (i)</td><td>pbw</td><td></td><td></td><td></td><td></td><td></td><td></td><td></td></tr>
<tr><td>Phosphorus-based (ii)</td><td>pbw</td><td></td><td></td><td></td><td></td><td></td><td></td><td></td></tr>
<tr><td>Release agent</td><td>(i)</td><td>pbw</td><td>0.03</td><td>0.03</td><td>0.03</td><td>0.03</td><td>0.03</td><td>0.03</td><td>0.03</td></tr>
<tr><td>Bluing agent</td><td>MB</td><td>ppm</td><td>0.75</td><td>0.75</td><td>0.75</td><td>0.75</td><td>0.75</td><td>0.75</td><td>0.75</td></tr>
<tr><td colspan="2">Blue tinge of pellet</td><td>b</td><td>-</td><td>-4.0</td><td>-3.9</td><td>-4.0</td><td>-4.0</td><td>-4.0</td><td>-4.0</td><td>-3.9</td></tr>
</table>

(continued)

| | | | Ex.1 | Ex.2 | Ex.3 | Ex.4 | Ex.5 | Ex.6 | Ex.7 |
|---|---|---|---|---|---|---|---|---|---|
| Characteristic properties of laminated sheet | Blue tinge of laminated sheet | Yellowness (b value) | -0.5 | -0.4 | -0.6 | -0.7 | -0.8 | -0.3 | -0.5 |
| | | Visual inspection | ○ | ○ | ○ | ○ | ○ | ○ | ○ |
| | Ultraviolet light resistance | Color change (ΔYI value) | 3.0 | 3.0 | 2.0 | 2.1 | 2.5 | 2.6 | 2.8 |
| | | Judgment | ○ | ○ | ○ | ○ | ○ | ○ | ○ |
| | Slipperiness | Judgment | ○ | ○ | ○ | ○ | ○ | ○ | ○ |
| | Contamination of roll | Judgment | ○ | ○ | ○ | ○ | ○ | ○ | ○ |
| Ex.: Example<br>Pbw: part by weight | | | | | | | | | |

Table 2

| | | | | C.Ex. 1 | C.Ex. 2 | C.Ex. 3 | C.Ex. 4 | C.Ex. 5 | C.Ex. 6 |
|---|---|---|---|---|---|---|---|---|---|
| Cover layer (B) | Main component | PC | pbw | 100 | 100 | 100 | 100 | 100 | 100 |
| | Antiblocking component | (i) | pbw | 0.35 | 0.10 | 0.35 | 0.20 | 0.35 | 0.35 |
| | Ultraviolet absorbent component | (i) | pbw | 3 | 1 | 3 | 1 | | |
| | | (ii) | pbw | | | | | 3 | |
| | | (iii) | pbw | | | | | | 3 |
| Substrate layer (A) | Main component | PC | pbw | 100 | 100 | 100 | 100 | 100 | 100 |
| | Heat stabilizer component | Thioether-based | pbw | | | | 0.02 | | |
| | | Hindered phenol-based | pbw | | | | | | |
| | | Phosphorus-based (i) | pbw | 0.02 | 0.02 | | | 0.02 | 0.02 |
| | | Phosphorus-based (ii) | pbw | | | 0.02 | | | |
| | Release agent | (i) | Pbw | 0.03 | 0.03 | 0.03 | 0.03 | 0.03 | 0.03 |
| | Bluing agent | MB | ppm | 0.75 | 0.75 | 0.75 | 0.75 | 0.75 | 0.75 |
| Blue tinge of pellet | | b | - | -4.0 | -3.9 | -4.0 | -4.0 | -3.9 | -3.9 |

(continued)

| | | | C.Ex. 1 | C.Ex. 2 | C.Ex. 3 | C.Ex. 4 | C.Ex. 5 | C.Ex. 6 |
|---|---|---|---|---|---|---|---|---|
| Characteristic properties of laminated sheet | Blue tinge of laminated sheet | Yellowness (b value) | 0.6 | 0.8 | 0.5 | -0.4 | 0.6 | 0.4 |
| | | Visual inspection | × | × | × | ○ | × | × |
| | Ultraviolet light resistance | Color change (ΔYI value) | 3.0 | 9.0 | 3.1 | 8.0 | 2.7 | 3.3 |
| | | Judgment | ○ | × | ○ | × | ○ | ○ |
| | Slipperiness | Judgment | ○ | × | ○ | × | ○ | ○ |
| | Contamination of roll | Judgment | ○ | ○ | ○ | ○ | ○ | ○ |
| C.Ex.: Comparative Example<br>Pbw: part by weight | | | | | | | | |

Effect of the Invention

The laminated sheet of the present invention is excellent in weatherability and color. According to the manufacturing process of the present invention, when a specific ultraviolet absorbent is concentrated and made existent in the cover layer, the content of the ultraviolet absorbent in the resin sheet can be reduced. Further, when a specific thioether-based compound is contained in the substrate layer in a specific ratio, discoloration at the time of co-extrusion molding a pellet can be suppressed, thereby making it possible to obtain a laminated sheet which is excellent in color and transparency and suppresses color deterioration even after its long-term use.

Industrial Feasibility

The laminated sheet of the present invention can be used as a construction material.

## Claims

**1.** A laminated sheet having a substrate layer as thick as 0.05 to 10 mm and a cover layer which is formed on at least one side of the substrate layer and as thick as 0.01 to 1 mm, wherein

(i) the substrate layer contains 100 parts by weight of a polycarbonate resin and 0.005 to 0.1 part by weight of at least one thioether-based compound selected from the group consisting of compounds represented by the following formulas (1) and (2):

$$(R^1\text{-S-CH}_2\text{-CH}_2\text{-C(O)O-CH}_2)_4\text{-C} \qquad (1)$$

[$R^1$'s may be the same or different and each a linear or branched hydrocarbon group having 4 to 20 carbon atoms]

$$(R^2\text{-O-C(O)-CH}_2\text{-CH}_2\text{-})_2\text{-S} \qquad (2)$$

[$R^2$'s may be the same or different and each a linear or branched hydrocarbon group having 6 to 22 carbon atoms] ; and
(ii) the cover layer contains 100 parts by weight of a polycarbonate resin and totaled 2 to 10 parts by weight of at least one ultraviolet absorbent selected from the group consisting of a benzotriazole-based compound having a molecular weight of not less than 380, a triazine-based compound having a molecular weight of not less than 400 and a cyclic iminoester-based compound represented by the following formula (5):

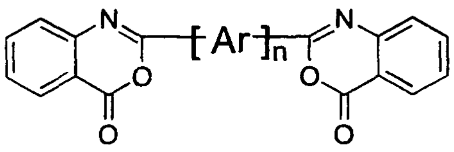

(5)

[Ar is a divalent aromatic hydrocarbon residue having 6 to 12 carbon atoms and may contain a hetero atom, and n is 0 or 1].

**2.** The laminated sheet according to claim 1, wherein the substrate layer further contains at least one hindered phenol compound selected from the group consisting of compounds represented by the following formulas (3) and (4):

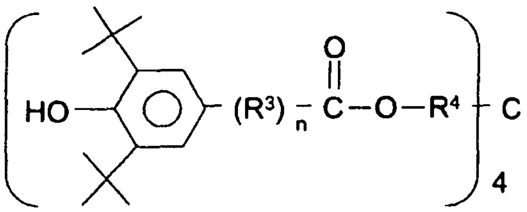

(3)

[$R^3$ and $R^4$ are each independently a linear hydrocarbon group having 1 to 6 carbon atoms, and n is an integer of 2 to 6]

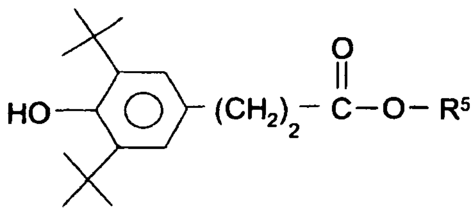

(4)

[$R^5$ is a linear or branched hydrocarbon group having 16 to 22 carbon atoms],
and the total content of the thioether-based compound and the hindered phenol compound is 0. 005 to 0.1 part by weight based on 100 parts by weight of the polycarbonate resin.

**3.** The laminated sheet according to claim 1, wherein the substrate layer contains 0.005 to 2.0 parts by weight of a release agent based on 100 parts by weight of the polycarbonate resin.

**4.** The laminated sheet according to claim 1, wherein the substrate layer contains 0.05 to 1.5 ppm of a bluing agent.

**5.** The laminated sheet according to claim 1, wherein the cover layer contains 0.1 to 3 parts by weight of an antiblocking agent based on 100 parts by weight of the polycarbonate resin.

**6.** A process of manufacturing a laminated sheet, comprising laminating together

(i) a sheet obtained by melt extruding (A) a resin composition comprising 100 parts by weight of a polycarbonate resin and 0. 005 to 0.1 part by weight of at least one thioether-based compound selected from the group consisting of compounds represented by the following formulas (1) and (2):

$(R^1\text{-S-CH}_2\text{-CH}_2\text{-C(O)O-CH}_2)_4\text{-C}$ (1)

[$R^1$'s may be the same or different and each a linear or branched hydrocarbon group having 4 to 20 carbon atoms]

$(R^2\text{-O-C(O)-CH}_2\text{-CH}_2\text{-})_2\text{-S}$ (2)

[$R^2$'s may be the same or different and each a linear or branched hydrocarbon group having 6 to 22 carbon

atoms], and

(ii) a film obtained by melt extruding (B) a resin composition comprising 100 parts by weight of a polycarbonate resin and 2 to 10 parts by weight of at least one ultraviolet absorbent selected from the group consisting of a benzotriazole-based compound having a molecular weight of not less than 380, a triazine-based compound having a molecular weight of not less than 400 and a cyclic iminoester-based compound represented by the following formula (5):

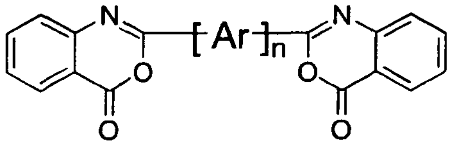

(5)

[Ar is a divalent aromatic hydrocarbon residue having 6 to 12 carbon atoms and may contain a hetero atom, and n is 0 or 1]
while they are molten.

**7.** The manufacturing process according to claim 6, wherein the resin composition (A) further comprises at least one hindered phenol compound selected from the group consisting of compounds represented by the following formulas (3) and (4):

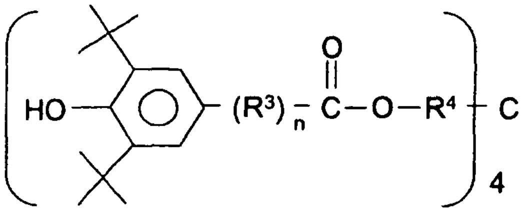

(3)

[$R^3$ and $R^4$ are each independently a linear hydrocarbon group having 1 to 6 carbon atoms, and n is an integer of 2 to

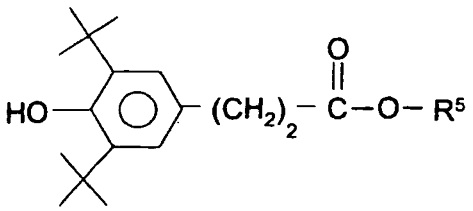

(4)

[$R^5$ is a linear or branched hydrocarbon group having 16 to 22 carbon atoms],
and the total content of the thioether-based compound and the hindered phenol compound is 0.005 to 0.1 part by weight based on 100 parts by weight of the polycarbonate resin.

**8.** The manufacturing method according to claim 6, wherein the resin compositions (A) and (B) are pellets.

## Patentansprüche

**1.** Schichtfolie, die eine Substratschicht, die so dick wie 0,05 bis 10 mm ist, und eine Deckschicht, die an wenigstens einer Seite der Substratschicht gebildet ist und so dick wie 0,01 bis 1 mm ist, hat, wobei

(i) die Substratschicht 100 Gewichtsteile eines Polycarbonatharzes und 0,005 bis 0,1 Gewichtsteile wenigstens einer Thioether-basierten Verbindung, ausgewählt aus der Gruppe, bestehend aus Verbindungen, die durch die folgenden Formeln (1) und (2) dargestellt werden:

$(R^1\text{-}S\text{-}CH_2\text{-}CH_2\text{-}C(O)O\text{-}CH_2)_4\text{-}C$ (1)

[$R^1$s können gleich oder unterschiedlich sein und jeweils eine lineare oder verzweigte Kohlenwasserstoffgruppe mit 4 bis 20 Kohlenstoffatomen sein]

$(R^2\text{-}O\text{-}C\ (O)\ \text{-}CH_2\text{-}CH_2\text{-})_2\text{-}S$ (2)

[$R^2$s können gleich oder unterschiedlich sein und jeweils eine lineare oder verzweigte Kohlenwasserstoffgruppe mit 6 bis 22 Kohlenstoffatomen sein], enthält und
(ii) die Deckschicht 100 Gewichtsteile eines Polycarbonatharzes und insgesamt 2 bis 10 Gewichtsteile wenigstens eines Ultraviolett-Absorptionsmittels, ausgewählt aus der Gruppe, bestehend aus einer Benzotriazol-basierten Verbindung mit einem Molekulargewicht von nicht weniger als 380, einer Triazin-basierten Verbindung mit einem Molekulargewicht von nicht weniger als 400 und einer cyclischen Iminoester-basierten Verbindung, die durch die folgende Formel (5) dargestellt wird:

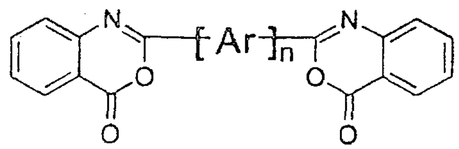

(5)

[Ar ist ein divalenter aromatischer Kohlenwasserstoffrest mit 6 bis 12 Kohlenstoffatomen und kann ein Heteroatom enthalten und n ist 0 oder 1] enthält.

**2.** Schichtfolie gemäß Anspruch 1, wobei die Substratschicht außerdem wenigstens eine gehinderte Phenolverbindung, ausgewählt aus der Gruppe, bestehend aus Verbindungen, die durch die folgenden Formeln (3) und (4) dargestellt werden:

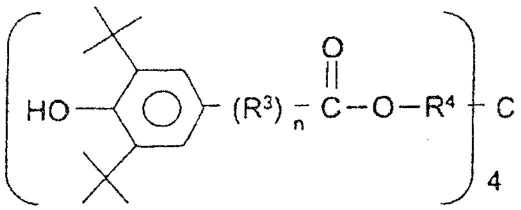

(3)

[$R^3$ und $R^4$ sind jeweils unabhängig eine lineare Kohlenwasserstoffgruppe mit 1 bis 6 Kohlenstoffatomen und n ist eine ganze Zahl von 2 bis 6]

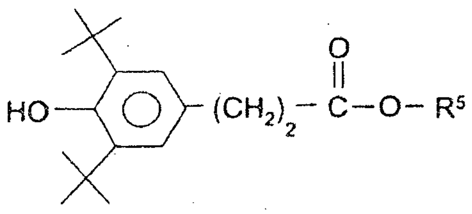

(4)

[$R^5$ ist eine lineare oder verzweigte Kohlenwasserstoffgruppe mit 16 bis 22 Kohlenstoffatomen],
enthält und der Gesamtgehalt der Thioether-basierten Verbindung und der gehinderten Phenolverbindung 0,005 bis 0,1 Gewichtsteile, bezogen auf 100 Gewichtsteile des Polycarbonatharzes, ist.

**3.** Schichtfolie gemäß Anspruch 1, wobei die Substratschicht 0,005 bis 2,0 Gewichtsteile eines Trennmittels, bezogen auf 100 Gewichtsteile des Polycarbonatharzes, enthält.

**4.** Schichtfolie gemäß Anspruch 1, wobei die Substratschicht 0,05 bis 1,5 ppm eines Bläuungsmittels enthält.

**5.** Schichtfolie gemäß Anspruch 1, wobei die Deckschicht 0,1 bis 3 Gewichtsteile eines Antiblockierungsmittels, bezogen auf 100 Gewichtsteile des Polycarbonatharzes, enthält.

**6.** Verfahren zur Herstellung einer Schichtfolie, umfassend Laminieren

(i) einer Folie, erhalten durch Schmelzextrudieren (A) einer Harzzusammensetzung, umfassend 100 Gewichtsteile eines Polycarbonatharzes und 0,005 bis 0,1 Gewichtsteile wenigstens einer Thioether-basierten Verbindung, ausgewählt aus der Gruppe, bestehend aus Verbindungen, die durch die folgenden Formeln (1) und (2) dargestellt werden:

$$(R^1\text{-S-}CH_2\text{-}CH_2\text{-C(O)O-}CH_2)_4\text{-C} \qquad (1)$$

[$R^1$s können gleich oder unterschiedlich sein und jeweils eine lineare oder verzweigte Kohlenwasserstoffgruppe mit 4 bis 20 Kohlenstoffatomen sein]

$$(R^2\text{-O-C(O)-}CH_2\text{-}CH_2\text{-})_2\text{-S} \qquad (2)$$

[$R^2$s können gleich oder unterschiedlich sein und jeweils eine lineare oder verzweigte Kohlenwasserstoffgruppe mit 6 bis 22 Kohlenstoffatomen sein], und

(ii) eines Films, erhalten durch Schmelzextrudieren (B) einer Harzzusammensetzung, umfassend 100 Gewichtsteile eines Polycarbonatharzes und 2 bis 10 Gewichtsteile wenigstens eines Ultraviolett-Absorptionsmittels, ausgewählt aus der Gruppe, bestehend aus einer Benzotriazol-basierten Verbindung mit einem Molekulargewicht von nicht weniger als 380, einer Triazin-basierten Verbindung mit einem Molekulargewicht von nicht weniger als 400 und einer cyclischen Iminoester-basierten Verbindung, dargestellt durch die folgende Formel (5):

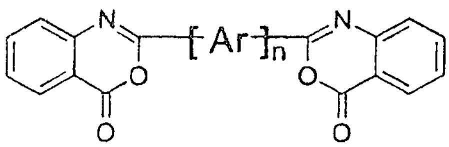

(5)

[Ar ist ein divalenter aromatischer Kohlenwasserstoffrest mit 6 bis 12 Kohlenstoffatomen und kann ein Heteroatom enthalten und n ist 0 oder 1],
während sie geschmolzen werden.

**7.** Herstellungsverfahren gemäß Anspruch 6, wobei die Harzzusammensetzung (A) außerdem wenigstens eine gehinderte Phenolverbindung umfasst, die ausgewählt ist aus der Gruppe, bestehend aus Verbindungen, die durch die folgenden Formeln (3) und (4) dargestellt werden:

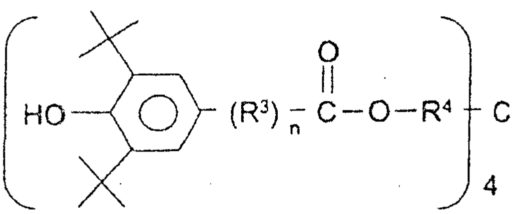

(3)

[$R^3$ und $R^4$ sind jeweils unabhängig eine lineare Kohlenwasserstoffgruppe mit 1 bis 6 Kohlenstoffatomen und n ist eine ganze Zahl von 2 bis 6]

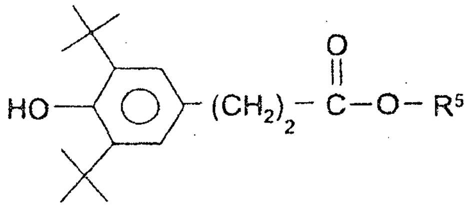

(4)

[$R^5$ ist eine lineare oder verzweigte Kohlenwasserstoffgruppe mit 16 bis 22 Kohlenstoffatomen], und wobei der Gesamtgehalt der Thioether-basierten Verbindung und der gehinderten Phenolverbindung 0,005 bis 0,1 Gewichtsteile, bezogen auf 100 Gewichtsteile des Polycarbonatharzes, ist.

**8.** Herstellungsverfahren gemäß Anspruch 6, wobei die Harzzusammensetzungen (A) und (B) Pellets sind.

## Revendications

**1.** Feuille stratifiée ayant une couche de substrat d'une épaisseur de 0,05 à 10 mm et une couche de recouvrement qui est formée sur au moins un côté de la couche de substrat et d'une épaisseur de 0,01 à 1 mm, dans laquelle

(i) la couche de substrat contient 100 parties en poids d'une résine poly(carbonate) et 0,005 à 0,1 partie en poids d'au moins un composé à base de thioéther choisi dans le groupe consistant en les composés représentés par les formules (1) et (2) suivantes :

$$(R^1\text{-S-CH}_2\text{-CH}_2\text{-C(O)O-CH}_2)_4\text{-C} \qquad (1)$$

[les $R^1$ peuvent être identiques ou différents et chacun peut être un groupe hydrocarbure linéaire ou ramifié ayant 4 à 20 atomes de carbone]

$$(R^2\text{-O-C(O)-CH}_2\text{-CH}_2\text{-})_2\text{-S} \qquad (2)$$

[les $R^2$ peuvent être identiques ou différents et chacun peut être un groupe hydrocarbure linéaire ou ramifié ayant 6 à 22 atomes de carbone] ; et

(ii) la couche de recouvrement contient 100 parties en poids d'une résine poly(carbonate) et totalise 2 à 10 parties en poids d'au moins un absorbant ultraviolet choisi dans le groupe consistant en un composé à base de benzotriazole ayant un poids moléculaire non inférieur à 380, un composé à base de triazine ayant un poids moléculaire non inférieur à 400 et un composé à base d'iminoester cyclique représenté par la formule (5) suivante:

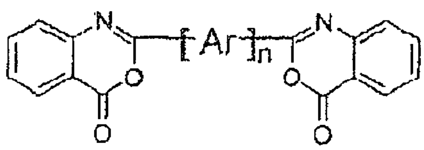

(5)

[Ar est un résidu hydrocarbure aromatique divalent ayant 6 à 12 atomes de carbone et peut contenir un hétéroatome, et n vaut 0 ou 1].

**2.** Feuille stratifiée selon la revendication 1, dans laquelle la couche de substrat contient en outre au moins un composé phénol encombré choisi dans le groupe consistant en des composés représentés par les formules (3) et (4) suivantes :

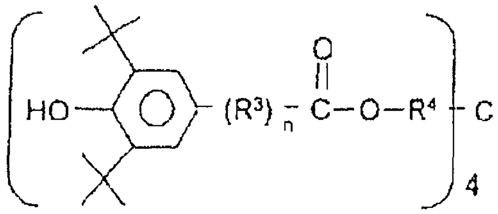

(3)

[$R^3$ et $R^4$ sont chacun indépendamment un groupe hydrocarbure linéaire ayant 1 à 6 atomes de carbone, et n est un nombre entier de 2 à 6]

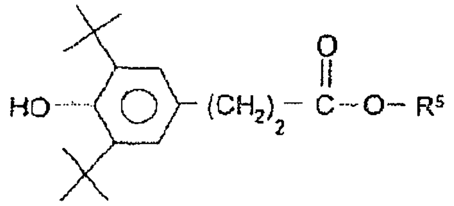

(4)

[$R^5$ est un groupe hydrocarbure linéaire ou ramifié ayant 16 à 22 atomes de carbone], et la teneur totale en composé à base de thioéther et en composé phénol encombré est de 0,005 à 0,1 partie en poids sur la base de 100 parties en poids de la résine poly(carbonate).

**3.** Feuille stratifiée selon la revendication 1, dans laquelle la couche de substrat contient 0,005 à 2,0 parties en poids d'un agent de démoulage sur la base de 100 parties en poids de la résine poly(carbonate).

**4.** Feuille stratifiée selon la revendication 1, dans laquelle la couche de substrat contient 0,05 à 1,5 ppm d'un produit d'azurage.

**5.** Feuille stratifiée selon la revendication 1, dans laquelle la couche de recouvrement contient 0,1 à 3 parties en poids d'un agent anti-adhérent sur la base de 100 parties en poids de la résine poly(carbonate).

**6.** Procédé de fabrication d'une feuille stratifiée, comprenant la stratification conjointe

(i) d'une feuille obtenue par extrusion par fusion (A) d'une composition de résine comprenant 100 parties en poids d'une résine poly(carbonate) et 0,005 à 0,1 partie en poids d'au moins un composé à base de thioéther choisi dans le groupe consistant en les composés représentés par les formules (1) et (2) suivantes :

$$(R^1\text{-S-CH}_2\text{-CH}_2\text{-C(O)O-CH}_2)_4\text{-C} \qquad (1)$$

[les $R^1$ peuvent être identiques ou différents et chacun peut être un groupe hydrocarbure linéaire ou ramifié ayant 4 à 20 atomes de carbone]

$$(R^2\text{-O-C(O) -CH}_2\text{-CH}_2\text{-})_2\text{-S} \qquad (2)$$

[les $R^2$ peuvent être identiques ou différents et chacun peut être un groupe hydrocarbure linéaire ou ramifié ayant 6 à 22 atomes de carbone] ; et
(ii) d'un film obtenu par extrusion par fusion (B) d'une composition de résine comprenant 100 parties en poids d'une résine poly(carbonate) et 2 à 10 parties en poids d'au moins un absorbant ultraviolet choisi dans le groupe consistant en un composé à base de benzotriazole ayant un poids moléculaire non inférieur à 380, un composé à base de triazine ayant un poids moléculaire non inférieur à 400 et un composé à base d'iminoester cyclique représenté par la formule (5) suivante :

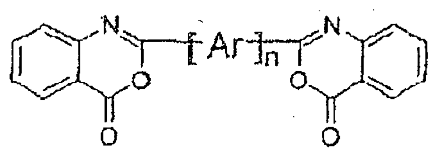

(5)

[Ar est un résidu hydrocarbure aromatique divalent ayant 6 à 12 atomes de carbone et peut contenir un hétéroatome, et n vaut 0 ou 1]
tandis qu'ils sont fondus.

**7.** Procédé de fabrication selon la revendication 6, dans lequel la composition de résine (A) comprend en outre au moins un composé phénol encombré choisi dans le groupe consistant en les composés représentés par les formules (3) et (4) suivantes :

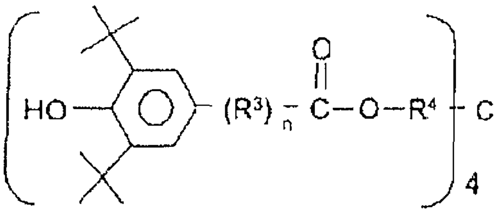

(3)

[$R^3$ et $R^4$ sont chacun indépendamment un groupe hydrocarbure linéaire ayant 1 à 6 atomes de carbone, et n est un nombre entier de 2 à 6]

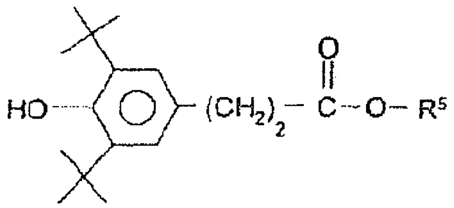

(4)

[$R^5$ est un groupe hydrocarbure linéaire ou ramifié ayant 16 à 22 atomes de carbone],
et la teneur totale en composé à base de thioéther et en composé phénol encombré est de 0,005 à 0,1 partie en poids sur la base de 100 parties en poids de la résine poly(carbonate).

**8.** Procédé de fabrication selon la revendication 6, dans lequel les compositions de résine (A) et (B) sont des granulés.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 1165419 A
- JP 2000264977 A
- JP 6312493 A
- JP 2006028442 A
- JP 2006002120 A
- JP 6172508 A
- JP 8027370 A
- JP 2001055435 A
- JP 2002117580 A